# EUROPÄISCHE PATENTSCHRIFT

(11) **EP 3 743 844 B1**
(45) Veröffentlichungstag und Bekanntmachung des Hinweises auf die Patenterteilung: **23.03.2022**
(21) Anmeldenummer: 19701762.7
(22) Anmeldetag: 15.01.2019
(51) Int. Cl.: G06F 21/62, G06F 21/64, H04L 9/32, H04W 12/02

(54) **BLOCKCHAIN-BASIERTES IDENTITÄTSSYSTEM**
BLOCKCHAIN-BASED IDENTITY SYSTEM
SYSTÈME D'IDENTITÉ BASÉ SUR CHAÎNES DE BLOCS

(30) Priorität: 22.01.2018 DE 102018000471
(43) Veröffentlichungstag der Anmeldung: 02.12.2020
(73) Patentinhaber: Giesecke+Devrient Mobile Security GmbH, 81677 München (DE)
(72) Erfinder: KAMM, Frank-Michael, 83607 Holzkirchen (DE)
(74) Vertreter: Giesecke + Devrient IP
(86) Internationale Anmeldenummer: PCT/EP2019/000014
(87) Internationale Veröffentlichungsnummer: WO 2019/141505

(56) Entgegenhaltungen:
- AU-A4- 2017 100 968
- US-A1- 2016 330 027

## Beschreibung

Die vorliegende Erfindung ist auf ein Verfahren zum vertraulichen Überprüfen einer elektronischen Identität gerichtet, wobei eine sogenannte Blockchain Anwendung findet. Das vorgeschlagene Verfahren ermöglicht es, dass ein Akteur eine Blockchain-Identität erkennen kann, wobei jedoch ein Vertraulichkeitsniveau der jeweiligen Identität mitsamt Identitätsattributen gewahrt wird. Die vorliegende Erfindung ist ferner gerichtet auf ein entsprechend eingerichtetes Identitätssystem sowie auf ein Computerprogrammprodukt mit Steuerbefehlen, welche das Verfahren implementieren bzw. die vorgeschlagene Systemanordnung betreiben.

CN 106682530 A1 zeigt ein Verfahren zum Teilen medizinischer Information unter Wahrung der Vertraulichkeit. Hierbei kommt u. a. die sogenannte Blockchain-Technologie zum Einsatz.

US 9,635,000 B1 zeigt ein System zum Verwalten von Identitäten in einem Computernetzwerk.

US 2017/0149819 A1 zeigt ein Computernetzwerk, in dem Sicherheitsmechanismen implementiert sind, welche ebenfalls auf die Blockchain-Technologie abstellen.

Der Stand der Technik diskutiert verschiedenste Anwendungen für die Blockchain-Technologie. Bekannt ist die Cryptowährung Bitcoin, sowie unzählige weitere Cryptowährungen. Darüber hinaus experimentieren Banken und Versicherungen mit Blockchains für den Interbanken-Verkehr und für Handelsplattformen. Weitere diskutierte Anwendungen sind öffentliche Register (z.B.. Grundbuch) sowie Identitätsplattformen. Bei letzteren geht es darum, elektronische Identitäten in einer Blockchain abzubilden und die Blockchain als eine Art Datenspeicher für ein Identitätsmanagementsystem zu verwenden.

Neben dem Blockchain Ansatz existieren die klassischen, Datenbankbasierten Identitätsmanagement Systeme sowie eine ganze Reihe von mobilen Identitätssystemen, z.B. auf Basis von UICCs, anderen Tokens oder kartenbasiert über eID Karten. Der Vorteil des Blockchain Ansatzes ist, dass keine zentrale Instanz benötigt wird, die eine Identitätsplattform verwaltet.

Ein bisher nicht zufriedenstellend gelöstes Problem bei Blockchain-basierten Identitätsanwendungen ist das Thema Privatsphäre (Privacy) vs. Vertrauen. Einerseits soll ein Konsument der Blockchain-Identität (Relying Party) erkennen können, mit welchem Vertrauensniveau eine bestimmte Identität (bzw. Identitätsattribute) erfasst und bestätigt wurde. Andererseits sollen diese Identitätsattribute besonders in einer öffentlichen Blockchain nicht frei zugänglich sein und nicht untereinander bzw. gegenüber einer realen Person zugeordnet werden können. Außerdem soll nicht erkennbar sein, mit welchen Relying Parties eine bestimmte Identität in Bezug steht. Der Benutzer soll außerdem die Möglichkeit haben, zu entscheiden, welche (einzelnen) Attribute er gegenüber einer Relying Party präsentiert und welche nicht. Die nicht präsentierten Attribute sollen dabei nicht aus den präsentierten Attributen zuzuordnen sein.

Demgemäß ist es eine Aufgabe der vorliegenden Erfindung ein Verfahren bereitzustellen, welches es erlaubt, eine elektronische Identität derart zu überprüfen, dass das Verfahren dezentral in einem Netzwerk ausgeführt werden kann und zudem ein größtmöglicher Vertrauensschutz des Identitätsinhabers gewährleistet wird. Dies soll unter Verwendung bestehender Infrastrukturen möglich sein und somit lediglich einen geringen technischen Aufwand mit sich führen. Es ist ferner eine Aufgabe der vorliegenden Erfindung, ein entsprechend eingerichtetes Identitätssystem sowie ein Computerprogrammprodukt vorzuschlagen, welches Steuerbefehle zur Ausführung des Verfahrens bzw. zum Betreiben des Systems aufweist.

Die Aufgabe wird gelöst durch die Merkmale der unabhängigen Patentansprüche. Weitere vorteilhafte Ausgestaltungen sind in den Unteransprüchen angegeben.

Demgemäß wird ein Verfahren zum vertraulichen Überprüfen einer Identität unter Verwendung einer kryptographisch verketteten Liste vorgeschlagen. Hierbei handelt es sich vorzugsweise um eine sogenannte Blockchain.

Das Verfahren umfasst die Schritte des Bereitstellens von Identitätsattributen der Identität mitsamt einer symmetrischen Schlüsselinformation durch eine Benutzerinstanz, des Berechnens jeweils eines Hash-Werts für jedes Identitätsattribut unter Benutzung des symmetrischen Schlüssels (keyed Hash), derart, dass auch unter Kenntnis des Identitätsattributs kein Rückschluss auf den Hash Wert der Identität möglich ist, des Einschreibens der berechneten Hash-Werte als mindestens einen Listeneintrag in die kryptographisch verkettete Liste, des Übermittelns einer Adresse des mindestens einen Listeneintrags mitsamt der symmetrischen Schlüsselinformation von der Benutzerinstanz an eine Validierungsinstanz, des Validierens des mindestens einen Listeneintrags aufweisend die berechneten Hash-Werte unter Verwendung eines Identitätsdokuments, welches die Identitätsattribute aufweist, durch die Validierungsinstanz, wobei überprüft wird, ob die bereitgestellten und an der Adresse abgespeicherten Identitätsattribute mit den Identitätsattributen des Identitätsdokuments übereinstimmen, und des Einschreibens einer Signatur des mindestens einen Listeneintrags in die kryptographisch verkettete Liste im Falle eines positiven Validierens der Identitätsattribute durch die Validierungsinstanz.

Der Fachmann erkennt hierbei, dass die einzelnen Verfahrensschritte Unterschritte aufweisen können. Auch können einzelne Schritte derart iterativ ausgeführt werden, dass beispielsweise mehrere Daten bzw. Attribute einzeln übertragen werden bzw. Rechenschritte sequentiell oder parallel ausgeführt werden können.

Durch das vorgeschlagene Identitätssystem soll die Privatsphäre des Nutzers gesichert sein, während gleichzeitig eine Relying Party in der Lage ist, das Vertrauensniveau von Identitätsattributen zu bewerten. Einer dritten Instanz ist es dabei nicht ersichtlich, mit welcher Relying Party eine bestimmte Identität in Beziehung steht. Es lassen sich Attribute einzeln enthüllen, ohne dass dabei die nicht enthüllten Attribute zugeordnet werden können. Eine dritte Instanz kann außerdem keine Identitäten zuordnen, auch wenn einzelne Attribute öffentlich bekannt sind. Es ist außerdem nicht erforderlich, zusätzlich zur Blockchain einen Cloud Service zu betreiben, in dem die eigentlichen Attribute abgelegt sind.

Zusätzlich kann mit dem Schema eine reputationsbasierte Identität aufgebaut werden, in der z.B. einzelne Attribute häufig, aber mit geringerem Vertrauen validiert worden sind, während andere Attribute unter Umständen weniger häufig aber dafür mit höherem Vertrauensniveau validiert wurden.

Das Grundkonzept gliedert sich in die Schritte "A. Initiale Identifikation" (Enrolment, Validation) und "B. Benutzung der Identität":
A. Initiale Identifikation:
   Um initial eine Identität zu registrieren, werden gemäß einem Aspekt der vorliegenden Erfindung folgende Schritte durchgeführt:
   1. Ein Endbenutzer legt (z.B. in einer mobilen Applikation oder über ein Webinterface) die Attribute, die er validieren lassen möchte, fest, inklusive deren Inhalt (z.B. Name, Geburtsdatum, Geburtsort,...);
   2. Es wird ein symmetrischer Schlüssel generiert, der zur Berechnung eines keyed-Hash-Wertes der Attribute verwendet wird. Für jedes Attribut wird ein separater Hash-Wert berechnet. Durch die Verwendung eines keyed-Hash-Verfahrens ist es für Dritte nicht möglich, bei bekannten Attributen (z.B. Namen) die Identität ohne Kenntnis des Schlüssels zuzuordnen;
   3. Der Endbenutzer veröffentlicht die keyed-Hash-Werte seiner Attribute in der Blockchain. Bis jetzt hat er die Attribute nur selbst deklariert, sie sind aber noch nicht durch Dritte validiert worden;
   4. Im nächsten Schritt wendet sich der User an einen Validierungsservice, der in der Lage ist, Identitäten zu verifizieren (z.B. mit einem Videoldent Verfahren, in einer Filiale, usw.). Diesem Service präsentiert der Benutzer seine Blockchain-Adresse, in der die keyed-Hash-Werte der Attribute gespeichert sind. Außerdem präsentiert er den Schlüssel zur Hash-Berechnung, mit der der Service die Korrektheit der Hash-Werte überprüfen kann, sowie ein ID Dokument;
   5. Der Service führt eine Identifikation durch und vergleicht die selbstdeklarierten Attribute aus der Blockchain mit den Daten aus dem ID-Dokument. Wenn die Daten übereinstimmen, führt der Service eine Blockchain-Transaktion an die Adresse des Benutzers durch, in der er eine Signatur über die Hash-Werte mit übergibt sowie den Vertrauenslevel der Identifizierung (z. B. nach electronic Identification, Authentication and trust service eIDAS Level). Das Geheimnis wird anschließend wieder gelöscht.
   6. Da die Attribute nun validiert sind und eine Signatur über die Hash-Werte in der Blockchain hinterlegt ist, wird, wenn erforderlich, der öffentliche Schlüssel des Validierungsservice als Zertifikat mit einer entsprechenden Public Key Infrastrukture PKI hinterlegt. Damit können Dritte beurteilen, dass die Attribute durch eine anerkannte und vertrauenswürdige Institution überprüft wurden.
B. Die Benutzung der validierten Identität kann erfindungsgemäß wie folgt durchgeführt werden:
   1. Der Endbenutzer präsentiert einer Relying Party seine Blockchain Adresse, den Hash-Key und den Inhalt der erforderlichen Attribute.
   2. Die Relying Party berechnet aus dem Inhalt der Attribute den keyed-Hash-Wert mit Hilfe des Benutzer-Schlüssels und vergleicht ihn mit den in der Blockchain hinterlegten Daten. Außerdem überprüft die Relying Party die Signatur(en) des/der Validierungsservice(s) über die Daten.
   3. Falls erforderlich, führt die Relying Party ein Challenge-Response Protokoll mit dem Benutzer durch, um einen Nachweis zu bekommen, dass er den geheimen Schlüssel zu dem Blockchain Konto besitzt. Damit hat die Relying Party den Nachweis, dass es auch tatsächlich der Eigentümer des Blockchain-Kontos ist, der die Attribute weitergibt.
   4. Nach Abschluss der Verifikation löscht die Relying Party den Benutzer-Schlüssel.

In einer Ausführungsform der Erfindung wird jedes Attribut durch eine separate Blockchain-Adresse repräsentiert. Damit ist es zusätzlich unmöglich, die einzelnen Attribute einer gemeinsamen Identität zuzuordnen. Schritt 3 der Benutzungsphase B wird dann für jedes Attribut separat ausgeführt.

In einer weiteren Ausführungsform ist es vorgesehen, dass der Benutzer den Schlüssel für die Berechnung des keyed-Hash-Wertes nicht an die Relying Party herausgibt (von wo aus er potentiell weitergegeben werden könnte), sondern an einen Vertrauensdienst seiner Wahl, der dann die Auflösung der Hash-Werte und den Vergleich zu den Klartext Werten für die Relying Party (und nach Autorisierung durch den Benutzer, z. B. über ein OAuth 2. 0 Protokoll) übernimmt.

Das vorgeschlagene Verfahren dient dem vertraulichen Überprüfen der Identität, da erfindungsgemäß verhindert wird, dass unnötig Informationen des Identitätsinhabers preisgegeben werden. So ist es beispielsweise erfindungsgemäß möglich, die einzelnen Identitätsattribute, wie beispielsweise Name, Anschrift oder Geburtsdatum, an unterschiedlichen Positionen innerhalb der kryptographisch verketteten Liste abzuspeichern. Bei der kryptographisch verketteten Liste handelt es sich vorzugsweise um eine sogenannte Blockchain.

Eine Blockchain besteht aus mehreren Dateneinträgen, welche miteinander verbunden werden und die Verbindungsstücke jeweils Hash Werte darstellen. Somit ist also eine kryptographisch verkettete Liste eine kontinuierlich erweiterbare Liste von Datensätzen, welche auch als Blöcke oder vorliegend Listeneinträge bezeichnet werden. Hierbei ist es möglich, dass jeder Listeneintrag einen kryptographisch sicheren Hash des vorhergehenden Blocks aufweist, einen Zeitstempel und Transaktionsdaten. Es ergeben sich erfindungsgemäß auch die Vorteile der herkömmlichen Blockchain, da die einzelnen Identitätsattribute als Listeneinträge bzw. Blöcke codiert werden können.

Um die elektronische Identität zu modellieren, werden Identitätsattribute wie beispielsweise der Name des Identitätsinhabers bereitgestellt. Dies kann manuell derart erfolgen, dass ein Benutzer über eine Schnittstelle die Identitätsattribute benennt und diese mit Wert belegt. Da der Benutzer lediglich das System bedient, wird vorliegend von einer Benutzerinstanz gesprochen, die auf das Endgerät abstellt, welches der Benutzer zur Dateneingabe verwendet. Bei der Benutzerinstanz kann es sich somit beispielsweise um ein mobiles Endgerät mit einer Webschnittstelle handeln. So kann dem Benutzer eine Eingabemaske bereitgestellt werden, in die er die Identitätsattribute eingibt.

Zu diesen Identitätsattributen wird jeweils ein Hash-Wert errechnet, der vorzugsweise als ein keyed Hash-Wert vorliegt. Mittels eines solchen keyed Hash-Wertes ist es nicht möglich, dass Dritte auf die Identität zurückschließen können, auch wenn ihnen die Identitätsattribute vorliegen. Durch die Verwendung eines solchen keyed Hash-Verfahrens ist es auch für Angreifer nicht möglich, bei bekannten Attributen die Identität ohne Kenntnis des Schlüssels zuzuordnen. Somit bleibt also stets die Vertraulichkeit der Identität des Benutzers gewahrt, was insbesondere deshalb vorteilhaft ist, da die Daten in die kryptographisch verkettete Liste gespeichert werden und einer anfragenden Instanz zugänglich gemacht werden müssen.

Die berechneten Hash-Werte werden sodann in der Blockchain als ein Block bzw. als ein Listeneintrag abgespeichert. Es ist möglich, für jeden Hash-Wert einen eigenen Listeneintrag anzulegen oder aber auch mehrere Hash-Werte als einen einzigen Listeneintrag abzuspeichern. Nach der bekannten Blockchain-Technologie werden somit die Hash-Werte in die kryptographisch verkettete Liste eingereiht und netzwerktechnisch an weitere Netzwerkknoten verteilt. Die Adresse dieses Listeneintrags bzw. dieser Listeneinträge innerhalb der Blockchain wird mitsamt der symmetrischen Schlüsselinformation von dem Benutzer an die Validierungsinstanz übermittelt. Dies ermöglicht es der Validierungsinstanz, die Listeineinträge zu validieren, also bezüglich ihrer Korrektheit abzuprüfen.

Der Benutzer hat eingangs die Identitätsattribute selbst erstellt, und somit ist es in diesem Verfahrensschritt vorteilhaft, diese Angaben tatsächlich auch zu überprüfen. Hierzu kann der Benutzer ein Identitätsdokument, beispielsweise einen Pass, bereitstellen und eine entfernte Identifikation durchführen. Hierdurch kann also die Validierungsinstanz abprüfen, ob die Listeneinträge der Blockchain, welche die Identitätsattribute modellieren, tatsächlich korrekt sind und mit Daten des Identitätsdokuments übereinstimmen.

Als eine mögliche Überprüfung ist das sogenannte VideoIdent-Verfahren bekannt, bei dem es möglich ist, dass ein Benutzer beispielsweise mittels einer Webcam ein Ausweisdokument übermittelt. Somit stellt die Validierungsinstanz eine Datenschnittstelle bereit, die es dem Benutzer ermöglicht, sich zu identifizieren und so ohne großen Aufwand die korrekten Identitätsattribute des Identitätsdokuments bereitzustellen. Hierbei sind weitere Verfahren bekannt, welche es ermöglichen, das Identitätsdokument derart auszulesen, dass die Identitätsattribute verwertet werden können. So kann beispielsweise aus einem Pass der Name und die Anschrift ausgelesen werden.

Folglich liegen also die bereitgestellten Identitätsattribute vor, wie sie vom Benutzer angegeben wurden, und es liegen der Validierungsinstanz die Identitätsattribute vor, welche aus dem Identitätsdokument ausgelesen wurden. Insbesondere ist es also auch möglich, beide Attribute abzugleichen und somit die Korrektheit zu überprüfen. Dies wird vorliegend als ein Validieren bezeichnet, welches positiv verläuft, falls die bereitgestellten Identitätsattribute mit den aus dem Identitätsdokument ausgelesenen Identitätsattributen übereinstimmen. Stimmen diese Attribute nicht überein, so hat der Benutzer vielleicht falsche Werte angegeben, und dies wird erkannt. Danach kann veranlasst werden, dass das Verfahren wiederholt wird und der Benutzer erneut seine Identitätsattribute bereitstellen muss. Es ist auch möglich, dass die Identitätsattribute nicht falsch angegeben wurden, sondern vielmehr kann auch ein Angriff stattfinden, welcher bei dem Validieren erkannt wird. Somit wird in jedem Fall bei einem negativen Validieren das Verfahren entweder abgebrochen oder erneut ausgeführt.

Für den Fall, dass eine positive Validierung stattfindet, erfolgt ein Einschreiben einer Signatur des mindestens einen Listeneintrags in die kryptographisch verkettete Liste. Somit wird also der Listeneintrag, welcher die Identitätsattribute bzw. deren Hash-Werte aufweist, signiert, und es wird festgestellt, dass die Identitätsattribute korrekt in der Blockchain abgespeichert sind.

Gemäß einem weiteren Aspekt der vorliegenden Erfindung erfolgt ein Übermitteln der Adresse des mindestens einen Listeneintrags, der symmetrischen Schlüsselinformation und der Identitätsattribute von der Benutzerinstanz an eine Instanz, welche die Identität anfragt, woraufhin diese anfragende Instanz anhand der übermittelten Daten den eingeschriebenen mindestens einen Listenauftrag, aufweisend die berechneten Hash-Werte, überprüft. Dies hat den Vorteil, dass die anfragende Instanz, auch als Relying Party bezeichnet, alle Daten evaluieren kann, welche notwendig sind, um eine Identität festzustellen, eine dritte Partei jedoch nicht sieht, mit welcher Relying Party eine bestimmte Identität in Beziehung steht. Mit den übermittelten Daten kann die anfragende Instanz, also die Relying Party, die abgespeicherten Daten in der Blockchain überprüfen, was mittels eines Vergleiches durchgeführt wird. Bei der anfragenden Instanz kann es sich beispielsweise um eine Recheneinheit handeln, welche über ein Netzwerk mit der Benutzerinstanz kommuniziert. Somit hat die anfragende Instanz alle Möglichkeiten, eine Identität anhand der Blockchain-Technologie zu überprüfen.

Gemäß einem weiteren Aspekt der vorliegenden Erfindung umfasst das Überprüfen des mindestens einen Listeneintrags auch ein Überprüfen der eingeschriebenen Signatur. Dies hat den Vorteil, dass auch die Transaktionen der Validierungsinstanz berücksichtigt werden können und die Signatur, welche von der Validierungsinstanz bereitgestellt wird, ebenfalls zur Überprüfung verwendet werden kann. Hierbei kennt der Fachmann Verfahren, welche aufzeigen, wie eine Signatur zu evaluieren ist. Die Signatur kann von der sogenannten Relying Party aus der Blockchain ausgelesen werden.

Gemäß einem weiteren Aspekt der vorliegenden Erfindung wird zwischen der Benutzerinstanz und der anfragenden Instanz eine Challenge-Response-Authentifizierung durchgeführt. Dies hat den Vorteil, dass tatsächlich die übertragenen Daten von der Benutzerinstanz an die Relying Party von dem richtigen Benutzer übermittelt wurden. Dies sichert die Kommunikation zwischen der Benutzerinstanz und der Relying Party, so dass Angriffsszenarien unterbunden werden. Das Challenge-Response-Verfahren wird typischerweise von der Relying Party initiiert und beginnt mit einer Challenge-Nachricht an die Benutzerinstanz, welche mit einer Response-Nachricht antwortet, die unter anderem eine Signatur der Challenge mit dem privaten Schlüssel der Benutzerinstanz enthält.

Gemäß einem weiteren Aspekt der vorliegenden Erfindung sind die Hash-Werte sogenannte keyed Hash-Werte. Dies hat den Vorteil, dass mittels dieses Verfahrens kein Rückschluss von bekannten Identitätsattributen auf eine Identität möglich ist und somit die Identität stets verborgen bleibt, auch wenn die Identitätsattribute bzw. deren Hash-Werte aus der Blockchain auslesbar sind.

Gemäß einem weiteren Aspekt der vorliegenden Erfindung liegt die kryptographisch verkettete Liste als eine Blockchain vor. Dies hat den Vorteil, dass Sicherheitsmechanismen verwendet werden können, welche im Rahmen der sogenannten Blockchain-Technologie implementiert wurden, obwohl es erfindungsgemäß möglich ist, die Information vor unberechtigtem Zugriff zu schützen. Somit wird die Blockchain-Technologie um Regeln erweitert, welche die Privatsphäre des Nutzers sichern. Hierdurch lässt sich also das vorgeschlagene Verfahren in eine vorhandene Infrastruktur integrieren.

Gemäß einem weiteren Aspekt der vorliegenden Erfindung umfasst das Validieren unter Verwendung des Identitätsdokuments ein Video-Identifikations-Verfahren. Dies hat den Vorteil, dass ein Benutzer über eine webbasierte Schnittstelle seine Daten bereitstellen kann und somit sichergestellt werden kann, dass tatsächlich auch die korrekten Daten bzw. Identitätsattribute des Benutzers vorliegen. Ein Video-Identifikations-Verfahren ist beispielsweise das sogenannte VideoIdent-Verfahren, bei dem der Benutzer ein Ausweisdokument in eine Kamera hält. Hieraufhin kann das Dokument ausgelesen werden, und die Benutzerdaten werden mit den angegebenen Identitätsattributen verglichen. Alternativen zu einem solchen Video-Identifikations-Verfahren sind das herkömmliche Verfahren, bei dem der Kunde beispielsweise in einer Bankfiliale vorstellig wird und sich identifiziert oder die Verwendung einer elektronischen ID Karte wie z.B. dem elektronischen Personalausweis. Auch dies kann mit dem vorliegenden Verfahren kombiniert werden, und die korrekten Identitätsattribute können so beschafft werden.

Gemäß einem weiteren Aspekt der vorliegenden Erfindung umfasst das Einschreiben der Signatur ein Einschreiben einer Vertrauensstufe (Level of Assurance). Dies hat den Vorteil, dass eine Vertrauensstufe in der Blockchain abgelegt werden kann, welche beschreibt, wie hoch das Vertrauen in die Korrektheit der Identifizierung ist. In diesem Kontext kann auch die EU-Verordnung über elektronische Identifizierung und Vertrauensdienste für elektrische Transaktionen verwendet werden. Insbesondere kann das sogenannte eIDAS Vertrauensniveau verwendet werden. eIDAS steht hierbei für die europäische Verordnung über electronic IDentification, Authentication and trust Services. Somit kann also ein Wert abgespeichert werden, der angibt, mit welcher Wahrscheinlichkeit die erfassten Daten aus dem Identitätsdokument korrekt sind.

Gemäß einem weiteren Aspekt der vorliegenden Erfindung erfolgt das Einschreiben der berechneten Hash-Werte jeweils an unterschiedlichen Adressen der kryptographisch verketteten Liste. Dies hat den Vorteil, dass die Hash-Werte in unterschiedlichen Blöcken bzw. Listeneinträgen abgespeichert werden können und somit für einen Dritten nicht ersichtlich wird, dass diese Hash-Werte bzw. die entsprechenden Identitätsattribute einem bestimmten Profil bzw. einer Identität zugeordnet sind. Somit werden diese also unabhängig voneinander abgelegt, und es besteht zunächst kein ersichtlicher Zusammenhang zwischen diesen Daten. Somit wird wiederum die Privatsphäre des Benutzers geschützt, und die Hash-Werte können nicht korreliert werden.

Gemäß einem weiteren Aspekt der vorliegenden Erfindung wird in einer Kommunikation zwischen der Benutzerinstanz, der anfragenden Instanz und/oder der Validierungsinstanz eine vertrauensvolle Instanz zwischengeschaltet. Dies hat den Vorteil, dass einzelne Verfahrensschritte auch von einer solchen Zwischeninstanz ausgeführt werden können, und somit auch nicht stets alle Daten an die jeweiligen Instanzen übermittelt werden müssen. Somit werden die sensiblen Daten weiter über das Netzwerk verteilt, und es bilden sich keine Sammelpunkte der Daten, welche bei einem unberechtigten Zugriff ausgelesen werden könnten. Beispielsweise kann der Schlüssel für die Berechnung des keyed Hash-Wertes nicht an die Relying Party ausgegeben werden, sondern an einen Zwischendienst übermittelt werden, der dann die Auflösung der Hash-Werte und den Vergleich zu den Klartext-Werten für die Relying Party übernimmt.

Gemäß einem weiteren Aspekt der vorliegenden Erfindung sind die Benutzerinstanz, die anfragende Instanz und die Validierungsinstanz kommunikationstechnisch verbunden. Dies hat den Vorteil, dass die vorliegende Erfindung im Computer implementiert werden kann und alle beteiligten Instanzen als Recheneinheiten vorliegen können. Auch die Blockchain wird datentechnisch an die Instanzen angebunden, wozu Netzwerkkomponenten vorzusehen sind. Beispielsweise kann es sich bei einzelnen Instanzen um einen Server bzw. einen Client handeln.

Gemäß einem weiteren Aspekt der vorliegenden Erfindung wird die Validierungsinstanz von einem netzwerkbasierten Dienst bereitgestellt. Dies hat den Vorteil, dass eine herkömmliche Benutzerschnittstelle vorgesehen werden kann, welche das Identifikationsverfahren ausführt und das Identifikationsdokument ausliest. Somit kann eine sogenannte Remote Identification durchgeführt werden.

Gemäß einem weiteren Aspekt der vorliegenden Erfindung wird das Verfahren dezentral in einem datentechnischen Netzwerk ausgeführt. Dies hat den Vorteil, dass keine zentralen Instanzen vorzusehen sind, welche die Identitätsverwaltung durchführen, sondern vielmehr soll die Blockchain-Technologie angewendet werden, welche auf einer dezentralen Datenhaltung und Datenverwaltung basiert. Somit sind lediglich Netzwerkkomponenten, also die zugrundeliegende Infrastruktur, zentral, was bedeutet, dass netzwerktechnisch ein Server Verwendung finden kann, die einzelnen Verfahrensschritte aber dennoch dezentral ausgeführt werden. Insbesondere können Teile der Blockchain redundant und verteilt in dem Netzwerk gehalten werden.

Die Aufgabe wird auch gelöst durch ein Identitätssystem zum vertraulichen Überprüfen einer Identität unter Verwendung einer kryptographisch verketteten Liste, aufweisend eine Benutzerinstanz, eingerichtet zum Bereitstellen von Identitätsattributen der Identität mitsamt einer symmetrischen Schlüsselinformation, eine Kryptographieeinheit, eingerichtet zum Berechnen jeweils eines Hash-Werts für jedes Identitätsattribut, derart, dass auch unter Kenntnis des Identitätsattributs kein Rückschluss auf die Identität möglich ist, eine Datenschnittstelle, eingerichtet zum Einschreiben der berechneten Hash-Werte als mindestens einen Listeneintrag in die kryptographisch verkettete Liste, eine Netzwerkkomponente, eingerichtet zum Übermitteln einer Adresse des mindestens einen Listeneintrags mitsamt der symmetrischen Schlüsselinformation von der Benutzerinstanz an eine Validierungsinstanz, die Validierungsinstanz, eingerichtet zum Validieren des mindestens einen Listeneintrags aufweisend die berechneten Hash-Werte unter Verwendung eines Identitätsdokuments, welches die Identitätsattribute aufweist, durch die Validierungsinstanz, wobei überprüft wird, ob die bereitgestellten und an der Adresse abgespeicherten Identitätsattribute mit den Identitätsattributen des Identitätsdokuments übereinstimmen, und eine weitere Datenschnittstelle, eingerichtet zum Einschreiben einer Signatur des mindestens einen Listeneintrags in die kryptographisch verkettete Liste im Falle eines positiven Validierens der Identitätsattribute durch die Validierungsinstanz.

Der Fachmann erkennt hierbei, dass die Kryptographieeinheit beispielsweise in der Benutzerinstanz integriert sein kann. Die Datenschnittstelle kann einheitlich vorliegen, wobei es auch möglich ist, unterschiedliche Datenschnittstellen zu implementieren. Die einzelnen Instanzen können physisch oder aber auch softwaretechnisch vorgehalten werden.

Die Aufgabe wird auch gelöst durch ein Computerprogrammprodukt mit Steuerbefehlen, welche das vorgeschlagene Verfahren implementieren bzw. das vorgeschlagene System betreiben.

Erfindungsgemäß ist es besonders vorteilhaft, dass das vorgeschlagene Verfahren Verfahrensschritte aufweist, welche Funktionalität bereitstellen, die strukturell von dem System nachgebildet werden kann. Ferner umfasst das System strukturelle Merkmale, welche auch durch die Verfahrensschritte nachgebildet werden können. Das Computerprogrammprodukt dient sowohl dem Ausführen des vorgeschlagenen Verfahrens als auch dem Betreiben des Identitätssystems. Beispielsweise kann das Computerprogrammprodukt auch ein Netzwerkprotokoll umfassen.

Weitere vorteilhafte Ausgestaltungen werden anhand der beigefügten Figuren näher erläutert. Es zeigen:
- Fig. 1:: das erfindungsgemäße Identitätssystem und entsprechende Kommunikationspfade; und
- Fig. 2:: ein schematisches Ablaufdiagramm eines Verfahrens zum vertraulichen Überprüfen einer Identität gemäß einem Aspekt der vorliegenden Erfindung.

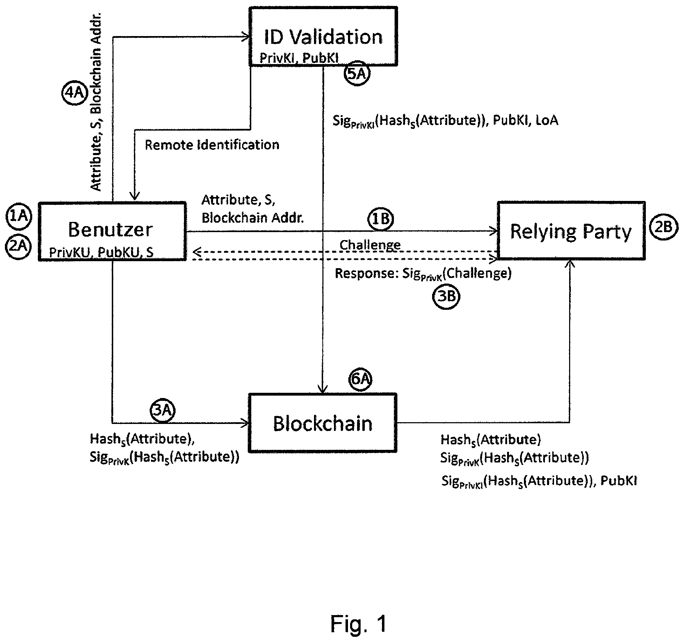

Fig. 1 zeigt einen schematischen Aufbau des Identitätssystems, wobei auf der linken Seite eine Benutzerinstanz angetragen ist, welche dazu dient, dass der Endbenutzer die Identitätsattribute angibt 1A, woraufhin ein symmetrischer Schlüssel S generiert wird, der zur Berechnung der keyed Hash-Werte Verwendung findet 2A. Die Funktionalitäten, welche mit einem A bezeichnet werden, dienen der initialen Identifikation, und die Funktionalitäten 1A, 2A, ... 6A entsprechen den Punkten, wie sie bereits unter "A. Initiale Identifikation" vorgetragen wurden. Die Funktionalitäten mit einem nachgestelltem B beziehen sich auf die Benutzung der validierten Identität und die entsprechenden Funktionalitäten 1B, 2B und 3B entsprechen ebenfalls den bereits aufgeführten Punkten.

Die Funktionalität 3A bezieht sich auf das Veröffentlichen der keyed Hash-Werte der Identitätsattribute in der Blockchain. Die Parameter, wie sie in der vorliegenden Fig. 1 angeführt sind, haben die folgende Bedeutung:
- Attribute:: Klartext der Attribute (z. B. Name, Adresse...)
- S:: Symmetrischer Schlüssel für keyed-Hash Kalkulation
- PrivKU/PubKU:: "user key pair" des Blockchain Kontos
- PrivKI, PubKI:: key pair (inkl. Zertifikat) des ID Validation Service

- LoA:: Sicherheitsstufe der ID Verifikation (z. B. gemäß eIDAS, ISO, NIST,...)

In Fig. 1 steht "ID Validation" für die Validierungsinstanz und "Relying Party" für die anfragende Instanz, also diejenige Einheit, welche sich auf eine Benutzeridentität verlassen soll.

Hat die Benutzerinstanz die Hash-Werte der Attribute in der Blockchain abgelegt 3A, so werden die Attribute mitsamt dem Schlüssel S und der Blockchain-Adresse der Hash-Werte an die Validierungsinstanz übersendet 4A. Die Validierungsinstanz führt dann eine sogenannte Remote Identification aus, was beispielsweise unter Verwendung eines VideoIdent-Verfahrens erfolgen kann. Die Validierungsinstanz stellt somit eine Funktionalität zur Ausführung der Identifikation bereit 5A und vergleicht die vom Benutzer deklarierten Attribute aus der Blockchain mit den Daten aus dem Identifikationsdokument. Bei einer positiven Validierung führt der Service bzw. die Validierungsinstanz eine Blockchain-Transaktion aus 5A, und die Identifikationsattribute sind somit validiert und eine entsprechende Signatur ist in der Blockchain abgelegt 6A.

Sodann erfolgt das Verwenden der hinterlegten Identität, wobei eine Relying Party eine Identität eines Benutzers abfragen will. Hierfür präsentiert der Endbenutzer der Relying Party die entsprechende Blockchain-Adresse, den Hash-Key und den Inhalt der erforderlichen Attribute 1B. Die Relying Party, also die anfragende Instanz, hat nunmehr alle Daten vorliegen, welche sie benötigt, um die in der Blockchain hinterlegten Daten zu überprüfen 2B und diese mit den vom Benutzer bereitgestellten Daten zu vergleichen. Somit kann also überprüft werden, ob die in der Blockchain hinterlegte Identität tatsächlich richtig ist. Hierzu kann beispielsweise eine Signatur der Validierungsinstanz überprüft werden 2B.

Um zu überprüfen, ob der geheime Schlüssel zu dem Blockchain-Konto des Benutzers gehört, kann ein sogenanntes Challenge-Response-Protokoll ausgeführt werden 3B, welches die Datenkommunikation zwischen der Benutzerinstanz und der Relying Party absichert.

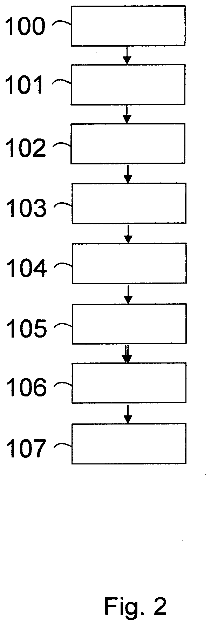

Fig. 2 zeigt ein schematisches Ablaufdiagramm eines Verfahrens zum vertraulichen Überprüfen einer Identität unter Verwendung einer kryptographisch verketteten Liste, aufweisend die Schritte Bereitstellen 100 von Identitätsattributen der Identität mitsamt einer symmetrischen Schlüsselinformation durch eine Benutzerinstanz, Berechnen 101 jeweils eines Hash-Werts für jedes Identitätsattribut, derart, dass auch unter Kenntnis des Identitätsattributs kein Rückschluss auf die Identität möglich ist, Einschreiben 102 der berechneten 101 Hash-Werte als mindestens einen Listeneintrag in die kryptographisch verkettete Liste, Übermitteln 103 einer Adresse des mindestens einen Listeneintrags mitsamt der symmetrischen Schlüsselinformation von der Benutzerinstanz an eine Validierungsinstanz, Validieren 104 des mindestens einen Listeneintrags aufweisend die berechneten 101 Hash-Werte unter Verwendung eines Identitätsdokuments, welches die Identitätsattribute aufweist, durch die Validierungsinstanz, wobei überprüft wird, ob die bereitgestellten 100 und an der Adresse abgespeicherten Identitätsattribute mit den Identitätsattributen des Identitätsdokuments übereinstimmen, und Eischreiben 105 einer Signatur des mindestens einen Listeneintrags in die kryptographisch verkettete Liste im Falle eines positiven Validierens der Identitätsattribute durch die Validierungsinstanz.

Ferner erfolgt ein Übermitteln 106 der Adresse des mindestens einen Listeneintrags, der symmetrischen Schlüsselinformation und der Identitätsattribute von der Benutzerinstanz an eine Instanz, welche die Identität anfragt, woraufhin diese anfragende Instanz anhand der übermittelten 106 Daten den eingeschriebenen 102 mindestens einen Listeneintrag aufweisend die berechneten 101 Hash-Werte überprüft 107.

Durch das vorgeschlagene Verfahren werden unter anderem die diskutierten Anforderungen abgedeckt:
Einer dritten Instanz ist nicht ersichtlich, mit welcher Relying Party eine bestimmte Identität in Beziehung steht: Die Relying Party führt aktiv keine Blockchain Transaktion durch, so dass die Beziehung für Dritte nicht erkennbar ist.

Es lassen sich Attribute einzeln enthüllen, ohne dass dabei die nicht enthüllten Attribute zugeordnet werden können: durch die Verwendung einer eigenen Blockchain Adresse pro Attribut ist eine Zuordnung untereinander nicht möglich.

Eine dritte Instanz kann außerdem keine Identitäten zuordnen, auch wenn einzelne Attribute öffentlich bekannt sind: ohne den Benutzer-Schlüssel kann ein unberechtigter Dritter keine Blockchain-Daten öffentlich bekannten Attributen zuordnen. Selbst mit dem Benutzer-Schlüssel kann er es nur zu Attributen zuordnen, die er ohnehin kennt. Er kann trotzdem den Benutzer nicht personifizieren, da er keinen privaten Schlüssel des Blockchain-Kontos besitzt.

Es ist außerdem nicht erforderlich, zusätzlich zur Blockchain noch einen Cloud Service zu betreiben, in dem die eigentlichen Attribute abgelegt sind: weitere Referenzen auf einen Cloud Service sind nicht erforderlich, da nur keyed-Hash-Werte in der Blockchain abgelegt werden. Der Inhalt der Attribute wird direkt zwischen Benutzer und Relying Party ausgetauscht. Zusätzlich kann mit dem Schema eine reputationsbasierte Identität aufgebaut werden: durch die Anzahl der Validierungen eines Attributes kann die Relying Party erkennen, wie häufig die Identität validiert wurde.

## Patentansprüche

1. Verfahren zum vertraulichen Überprüfen einer Identität unter Verwendung einer kryptographisch verketteten Liste, aufweisend die Schritte:
- Bereitstellen (100, 1A) von Identitätsattributen der Identität mitsamt einer symmetrischen Schlüsselinformation durch eine Benutzerinstanz;
- Berechnen (101, 2A) jeweils eines Hash-Werts für jedes Identitätsattribut unter Benutzung des symmetrischen Schlüssels als keyed Hash, derart, dass auch unter Kenntnis des Identitätsattributs kein Rückschluss auf die Identität möglich ist;
- Einschreiben (102, 3A) der berechneten (101, 2A) Hash-Werte als mindestens einen Listeneintrag in die kryptographisch verkettete Liste;
- Übermitteln (103, 4A) einer Adresse des mindestens einen Listeneintrags mitsamt der symmetrischen Schlüsselinformation von der Benutzerinstanz an eine Validierungsinstanz;
- Validieren (104, 5A) des mindestens einen Listeneintrags aufweisend die berechneten (101, 2A) Hash-Werte unter Verwendung eines Identitätsdokuments, welches die Identitätsattribute aufweist, durch die Validierungsinstanz, wobei überprüft wird, ob die bereitgestellten (100, 1A) und an der Adresse abgespeicherten Hash-Werte der Identitätsattribute mit den Identitätsattributen des Identitätsdokuments übereinstimmen; und
- Einschreiben (105, 6A) einer Signatur des mindestens einen Listeneintrags in die kryptographisch verkettete Liste im Falle eines positiven Validierens (104, 5A) der Identitätsattribute durch die Validierungsinstanz,
- wobei die Hash-Werte keyed Hash-Werte sind.

2. Verfahren nach Anspruch 1, **dadurch gekennzeichnet, dass** ein Übermitteln (106, 1B) der Adresse des mindestens einen Listeneintrags, der symmetrischen Schlüsselinformation und der Identitätsattribute von der Benutzerinstanz an eine Instanz erfolgt, welche die Identität anfragt, woraufhin diese anfragende Instanz anhand der übermittelten (106, 1B) Daten den eingeschriebenen (102, 3A) mindestens einen Listeneintrag aufweisend die berechneten (101, 2A) Hash-Werte überprüft (107, 2B).

3. Verfahren nach Anspruch 2, **dadurch gekennzeichnet, dass** das Überprüfen des mindestens einen Listeneintrags (107, 2B) auch ein Überprüfen der eingeschriebenen (105, 6A) Signatur umfasst.

4. Verfahren nach einem der Ansprüche 2 oder 3, **dadurch gekennzeichnet, dass** zwischen der Benutzerinstanz und der anfragenden Instanz eine Challenge-Response-Authentifizierung durchgeführt wird.

5. Verfahren nach einem der vorhergehenden Ansprüche, **dadurch gekennzeichnet, dass** die kryptographisch verkettete Liste als eine Blockchain vorliegt.

6. Verfahren nach einem der vorhergehenden Ansprüche, **dadurch gekennzeichnet, dass** das Validieren (104, 5A) unter Verwendung des Identitätsdokuments ein Video-Identifikations-Verfahren umfasst.

7. Verfahren nach einem der vorhergehenden Ansprüche, **dadurch gekennzeichnet, dass** das Einschreiben (105, 6A) der Signatur ein Einschreiben einer Vertrauensstufe umfasst, welche angibt, wie hoch das Vertrauen in die Korrektheit der Identität ist.

8. Verfahren nach einem der vorhergehenden Ansprüche, **dadurch gekennzeichnet, dass** das Einschreiben (102, 3A) der berechneten (101, 2A) Hash-Werte jeweils an unterschiedlichen Adressen der kryptographisch verketteten Liste erfolgt.

9. Verfahren nach einem der vorhergehenden Ansprüche, **dadurch gekennzeichnet, dass** in einer Kommunikation zwischen der Benutzerinstanz, der anfragenden Instanz und/oder der Validierungsinstanz eine vertrauensvolle Instanz zwischengeschaltet wird.

10. Verfahren nach einem der vorhergehenden Ansprüche, **dadurch gekennzeichnet, dass** die Benutzerinstanz, die anfragende Instanz und die Validierungsinstanz kommunikationstechnisch verbunden sind.

11. Verfahren nach einem der vorhergehenden Ansprüche, **dadurch gekennzeichnet, dass** die Validierungsinstanz von einem netzwerkbasierten Dienst bereitgestellt wird.

12. Verfahren nach einem der vorhergehenden Ansprüche, **dadurch gekennzeichnet, dass** das Verfahren dezentral in einem datentechnischen Netzwerk ausgeführt wird.

13. Identitätssystem zum vertraulichen Überprüfen einer Identität unter Verwendung einer kryptographisch verketteten Liste, aufweisend:
- eine Benutzerinstanz eingerichtet zum Bereitstellen (100, 1A) von Identitätsattributen der Identität mitsamt einer symmetrischen Schlüsselinformation;
- eine Kryptographieeinheit eingerichtet zum Berechnen (101, 2A) jeweils eines Hash-Werts für jedes Identitätsattribut unter Benutzung des symmetrischen Schlüssels als keyed Hash, derart, dass auch unter Kenntnis des Identitätsattributs kein Rückschluss auf die Identität möglich ist;
- eine Datenschnittstelle eingerichtet zum Einschreiben (102, 3A) der berechneten (101, 2A) Hash-Werte als mindestens einen Listeneintrag in die kryptographisch verkettete Liste;
- eine Netzwerkkomponente eingerichtet zum Übermitteln (103, 4A) einer Adresse des mindestens einen Listeneintrags mitsamt der symmetrischen Schlüsselinformation von der Benutzerinstanz an eine Validierungsinstanz;
- die Validierungsinstanz eingerichtet zum Validieren (104, 5A) des mindestens einen Listeneintrags aufweisend die berechneten (101, 2A) Hash-Werte unter Verwendung eines Identitätsdokuments, welches die Identitätsattribute aufweist, durch die Validierungsinstanz, wobei überprüft wird, ob die bereitgestellten (100, 1A) und an der Adresse abgespeicherten Hash-Werte der Identitätsattribute mit den Identitätsattributen des Identitätsdokuments übereinstimmen, wobei die Hash-Werte keyed Hash-Werte sind; und
- eine weitere Datenschnittstelle eingerichtet zum Einschreiben (105, 6A) einer Signatur des mindestens einen Listeneintrags in die kryptographisch verkettete Liste im Falle eines positiven Validierens (104, 5A) der Identitätsattribute durch die Validierungsinstanz.

14. Computerprogrammprodukt mit Steuerbefehlen, welche das Verfahren gemäß einem der Ansprüche 1 bis 12 ausführen, wenn sie auf einem Computer zur Ausführung gebracht werden.

## Claims

1. A method for the confidential verification of an identity while employing a cryptographically chained list, having the steps of:
- supplying (100, 1A) identity attributes of the identity together with a symmetrical key information item by a user entity;
- computing (101, 2A) a respective hash value for each identity attribute while using the symmetrical key as a keyed hash, in such a manner that it is not possible to infer the identity even if the identity attribute is known;
- writing (102, 3A) the computed (101, 2A) hash values as at least one list entry into the cryptographically chained list;
- transmitting (103, 4A) an address of the at least one list entry together with the symmetrical key information item from the user entity to a validation entity;
- validating (104, 5A) by the validation entity the at least one list entry having the computed (101, 2A) hash values while employing an identity document which has the identity attributes, wherein it is verified whether the hash values of the identity attributes supplied (100, 1A) and saved at the address match the identity attributes of the identity document; and
- writing (105, 6A) a signature of the at least one list entry into the cryptographically chained list in the case of a positive validation (104, 5A) of the identity attributes by the validation entity,
- wherein the hash values are keyed hash values.

2. The method according to claim 1, **characterized in that** a transmission (106, 1B) of the address of the at least one list entry, the symmetrical key information item and the identity attributes is effected from the user entity to an entity which queries the identity, whereupon this querying entity verifies (107, 2B) the written (102, 3A) at least one list entry having the computed (101, 2A) hash values on the basis of the transmitted (106, 1B) data.

3. The method according to claim 2, **characterized in that** the verification of the at least one list entry (107, 2B) also includes a verification of the written (105, 6A) signature.

4. The method according to either of claims 2 or 3, **characterized in that** a challenge-response authentication is carried out between the user entity and the querying entity.

5. The method according to any of the preceding claims, **characterized in that** the cryptographically chained list is present as a block chain.

6. The method according to any of the preceding claims, **characterized in that** the validation (104, 5A) while employing the identity document includes a video identification method.

7. The method according to any of the preceding claims, **characterized in that** the writing (105, 6A) of the signature includes a writing of a level of trust which indicates how high the trust in the correctness of the identity is.

8. The method according to any of the preceding claims, **characterized in that** the writing (102, 3A) of the computed (101, 2A) hash values takes place in each case at different addresses of the cryptographically chained list.

9. The method according to any of the preceding claims, **characterized in that** a trustworthy entity is interposed in a communication between the user entity, the querying entity and/or the validation entity.

10. The method according to any of the preceding claims, **characterized in that** the user entity, the querying entity and the validation entity are connected in terms of communication technology.

11. The method according to any of the preceding claims, **characterized in that** the validation entity is supplied by a network-based service.

12. The method according to any of the preceding claims, **characterized in that** the method is executed in decentralized manner in a data technology network.

13. An identity system for the confidential verification of an identity while employing a cryptographically chained list, having:
- a user entity adapted to supply (100, 1A) identity attributes of the identity together with a symmetrical key information item;
- a cryptographic unit adapted to compute (101, 2A) a respective hash value for each identity attribute while using the symmetrical key as a keyed hash, in such a manner that it is not possible to infer the identity even if the identity attribute is known;
- a data interface adapted to write (102, 3A) the computed (101, 2A) hash values as at least one list entry into the cryptographically chained list;
- a network component adapted to transmit (103, 4A) an address of the at least one list entry together with the symmetrical key information item from the user entity to a validation entity;
- the validation entity adapted for validating (104, 5A) by the validation entity the at least one list entry having the computed (101, 2A) hash values while employing an identity document which has the identity attributes, wherein it is verified whether the hash values of the identity attributes supplied (100, 1A) and saved at the address match the identity attributes of the identity document, wherein the hash values are keyed hash values; and
- a further data interface adapted to write (105, 6A) a signature of the at least one list entry into the cryptographically chained list in the case of a positive validation (104, 5A) of the identity attributes by the validation entity.

14. A computer program product with control commands which execute the method according to any of claims 1 to 12 when these are brought to execution on a computer.

## Revendications

1. Procédé de vérification confidentielle d'une identité en employant une liste concaténée cryptographiquement, comportant les étapes :
- mise à disposition (100, 1A) d'attributs d'identité de l'identité y compris d'une information symétrique clé par une instance utilisateur ;
- calcul (101, 2A) de respectivement une valeur de hachage pour chaque attribut d'identité en utilisant la clé symétrique en tant que hachage par clé, de telle façon que, même en ayant connaissance de l'attribut d'identité, aucune déduction de l'identité n'est possible ;
- écriture (102, 3A) des valeurs de hachage calculées (101, 2A), en tant qu'au moins une entrée en liste dans la liste concaténée cryptographiquement ;
- transmission (103, 4A) d'une adresse de la au moins une entrée en liste y compris de l'information symétrique clé de l'instance utilisateur à une instance de validation ;
- validation (104, 5A) de la au moins une entrée en liste comportant les valeurs de hachage calculées (101, 2A), en employant un document d'identité qui comporte les attributs d'identité, par l'instance de validation, cependant qu'il est vérifié si les valeurs de hachage, des attributs d'identité, mises à disposition (100, 1A) et mémorisées à l'adresse, correspondent avec les attributs d'identité du document d'identité ; et
- écriture (105, 6A) d'une signature de la au moins une entrée en liste dans la liste concaténée cryptographiquement dans le cas d'une validation positive (104, 5A) des attributs d'identité par l'instance de validation,
- cependant que les valeurs de hachage sont des valeurs de hachage par clé.

2. Procédé selon la revendication 1, **caractérisé en ce qu'**une transmission (106, 1B) de l'adresse de la au moins une entrée en liste, de l'information symétrique clé et des attributs d'identité a lieu de l'instance utilisateur à une instance qui demande l'identité, à la suite de quoi cette instance demandeuse vérifie (107, 2B) à l'aide des données transmises (106, 1B) la au moins une entrée écrite (102, 3A) en liste, comportant les valeurs de hachage calculées (101, 2A).

3. Procédé selon la revendication 2, **caractérisé en ce que** la vérification de la au moins une entrée en liste (107, 2B) comprend aussi une vérification de la signature écrite (105, 6A).

4. Procédé selon une des revendications 2 ou 3, **caractérisé en ce que**, entre l' instance utilisateur et l' instance demandeuse, une authentification défi/réponse est effectuée.

5. Procédé selon une des revendications précédentes, **caractérisé en ce que** la liste concaténée cryptographiquement se trouve sous forme d'une chaîne de blocs.

6. Procédé selon une des revendications précédentes, **caractérisé en ce que** la validation (104, 5A) en employant le document d'identité comprend un procédé d'identification par vidéo.

7. Procédé selon une des revendications précédentes, **caractérisé en ce que** l'écriture (105, 6A) de la signature comprend une écriture d'un niveau de confiance qui indique le degré de confiance en l'exactitude de l'identité.

8. Procédé selon une des revendications précédentes, **caractérisé en ce que** l'écriture (102, 3A) des valeurs de hachage calculées (101, 2A) a respectivement lieu à différentes adresses de la liste concaténée cryptographiquement.

9. Procédé selon une des revendications précédentes, **caractérisé en ce que**, dans une communication entre l'instance utilisateur, l'instance demandeuse et/ou l'instance de validation, une instance de confiance est interposée.

10. Procédé selon une des revendications précédentes, **caractérisé en ce que** l' instance utilisateur, l'instance demandeuse et l'instance de validation sont connectés par technique de communication.

11. Procédé selon une des revendications précédentes, **caractérisé en ce que** l' instance de validation est mise à disposition par un service basé sur réseau.

12. Procédé selon une des revendications précédentes, **caractérisé en ce que** le procédé est exécuté de manière décentralisée dans un réseau de technique des données.

13. Système d'identité destiné à la vérification confidentielle d'une identité en employant une liste concaténée cryptographiquement, comportant :
- une instance utilisateur conçue pour la mise à disposition (100, 1A) d'attributs d'identité de l'identité y compris d'une information symétrique clé ;
- une unité de cryptographie conçue pour le calcul (101, 2A) de respectivement une valeur de hachage pour chaque attribut d'identité en utilisant la clé symétrique en tant que hachage par clé, de telle façon que
même en ayant connaissance de l'attribut d'identité, aucune déduction de l'identité n'est possible ;
- une interface de données conçue pour l'écriture (102, 3A) des valeurs de hachage calculées (101, 2A), en tant qu'au moins une entrée en liste dans la liste concaténée cryptographiquement ;
- un composant de réseau conçu pour la transmission (103, 4A) d'une adresse de la au moins une entrée en liste y compris de l'information symétrique clé de l'instance utilisateur à une instance de validation ;
- l'instance de validation conçue pour la validation (104, 5A) de la moins une entrée en liste, comportant les valeurs de hachage calculées (101, 2A), en employant un document d'identité qui comporte les attributs d'identité, par l'instance de validation, cependant qu'il est vérifié si les valeurs de hachage, des attributs d'identité, mises à disposition (100, 1A) et mémorisées à l'adresse, correspondent avec les attributs d'identité du document d'identité, cependant que les valeurs de hachage sont des valeurs de hachage par clé ; et
- une autre interface de données conçue pour l'écriture (105, 6A) d'une signature de la au moins une entrée en liste dans la liste concaténée cryptographiquement dans le cas d'une validation positive (104, 5A) des attributs d'identité par l'instance de validation.

14. Produit programme d'ordinateur ayant des instructions de commande qui exécutent le procédé selon une des revendications de 1 à 12 quand elles sont mises à exécution sur un ordinateur.
